# EUROPÄISCHE PATENTSCHRIFT

(11) **EP 1 335 952 B1**
(45) Veröffentlichungstag und Bekanntmachung des Hinweises auf die Patenterteilung: **31.05.2006**
(21) Anmeldenummer: 01976312.7
(22) Anmeldetag: 15.10.2001
(51) Int. Cl.: C08K 5/3475, C08L 69/00

(54) **ZUSAMMENSETZUNG ENTHALTEND THERMOPLASTISCHE KUNSTSTOFFE**
COMPOSITION CONTAINING THERMOPLASTICS
COMPOSITION CONTENANT DES THERMOPLASTIQUES

(30) Priorität: 26.10.2000 DE 10053151
(43) Veröffentlichungstag der Anmeldung: 20.08.2003
(73) Patentinhaber: Bayer MaterialScience AG, 51368 Leverkusen (DE)
(72) Erfinder: GORNY, Rüdiger, 47800 Krefeld (DE); ANDERS, Siegfried, 51147 Köln (DE); NISING, Wolfgang, 53757 St. Augustin (DE)
(86) Internationale Anmeldenummer: PCT/EP2001/011870
(87) Internationale Veröffentlichungsnummer: WO 2002/034825

(56) Entgegenhaltungen:
- EP-A- 0 786 675
- EP-A- 0 855 393
- WO-A-01/34694

## Beschreibung

Die vorliegende Erfindung betrifft Zusammensetzungen enthaltend thermoplastische Kunststoffe und Benzotriazole als UV-Absorber sowie daraus hergestellte Erzeugnisse. Bei den erfindungsgemäßen Erzeugnissen handelt es sich bevorzugt um mehrschichtige Platten, bei denen eine oder beide der äußeren Schichten aus den erfindungsgemäßen Zusammensetzungen bestehen.

Platten enthaltend thermoplastische Kunststoffe sind bekannt.

Polycarbonatplatten sind beispielsweise aus EP-A 0 110 221 bekannt und werden für eine Vielzahl von Anwendungszwecken bereitgestellt. Die Herstellung erfolgt beispielsweise durch Extrusion von Zusammensetzungen enthaltend Polycarbonat und gegebenenfalls Coextrusion mit Zusammensetzungen enthaltend Polycarbonat, die einen erhöhten Anteil an UV-Absorbern enthalten.

EP-A 0 320 632 und EP-A 0 247 480 beschreiben coextrudierte Platten aus Zusammensetzungen enthaltend Polycarbonat, die einen schwerflüchtigen UV-Absorber auf Basis substituierter Benzotriazole enthalten.

DE-A 1 670 951 lehrt, dass dimere Benzotriazole den monomeren Benzotriazolen aufgrund ihrer deutlich geringeren Flüchtigkeit im Polycarbonat vorzuziehen sind.

Ein bei der Extrusion solcher Platten auftretendes Problem ist das Absetzen flüchtiger Bestandteile aus den Zusammensetzungen enthaltend Polycarbonat oder allgemein thermoplastische Kunststoffe am Kalibrator (bei Stegplatten) oder auf den Walzen (bei Massivplatten), die zu Oberflächenstörungen führen können. Flüchtige Bestandteile sind beispielsweise UV-Absorber und andere niedermolekulare Bestandteile der Zusammensetzungen.

Nachteilig ist bei den Platten gemäß des Standes der Technik, dass bei längerer Extrusionsdauer die Oberfläche der Platten durch die genannten Ausdampfungen aus der Schmelze der Zusammensetzungen enthaltend Polycarbonat oder allgemein thermoplastische Kunststoffe, besonders bei der Coextrusion, nachteilig beeinflusst wird.

Das vermehrte Ausdampfen des UV-Absorbers aus der Schmelze der Zusammensetzungen enthaltend Polycarbonat oder allgemein thermoplastische Kunststoffe führt zur Belagsbildung am Kalibrator oder den Walzen und schließlich zur Bildung von Störungen der Plattenoberfläche (z.B. weiße Flecken, Welligkeit usw.). Am Kalibrator führt außerdem der Polycarbonatabrieb oder der Abrieb von thermoplastische Kunststoffe allgemein zu pulverigen Ablagerungen auf den coextrudierten Polycarbonatplatten bzw. Platten aus thermoplastischen Kunststoffen.

Der vorliegenden Erfindung liegt somit die Aufgabe zugrunde, Zusammensetzungen enthaltend thermoplastische Kunststoffe dahingehend zu optimieren, dass bei der Extrusion der Zusammensetzungen zu Platten auch bei längerer kontinuierlicher Fahrweise die gute Qualität der Oberfläche der extrudierten Platten, bei gleichbleibendem Schutz gegen UV-Strahlung beibehalten werden kann.

Weiterhin besteht erfindungsgemäß die Aufgabe, aus den erfindungsgemäßen Zusammensetzungen erhältliche Erzeugnisse bereitzustellen.

Überraschend wurde gefunden, dass Zusammensetzungen, die neben thermoplastischen Kunststoffen außerdem zwei verschiedene UV-Absorber in einem bestimmten Gewichtsverhältnis zueinander enthalten, die erfindungsgemäße Aufgabe lösen. Weiterhin lösen aus diesen Zusammensetzungen erhältliche Erzeugnisse die erfindungsgemäße Aufgabe.

Die erfindungsgemäße Aufgabe wird gelöst durch die Verwendung von Mischungen enthaltend 0,1 bis 15 Gewichtsteile einer oder mehrerer verschiedener Verbindungen der Formel (I) 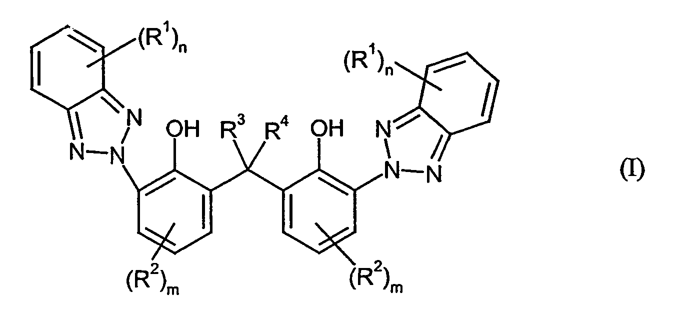 worin
- R¹ und R²: gleich oder verschieden sind und H, Halogen, C₁- bis C₁₀-Alkyl, C₅- bis C₁₀-Cycloalkyl, C₇- bis C₁₃-Aralkyl, C₆- bis C₁₄-Aryl, -OR⁵ oder -(CO)-O-R⁵ bedeuten, mit
R⁵ gleich H oder C₁- bis C₄-Alkyl,
- R³ und R⁴: gleich oder verschieden sind und H, C₁- bis C₄-Alkyl, C₅- bis C₆-Cycloalkyl, Benzyl oder C₆- bis C₁₄-Aryl bedeuten,
- m: 1, 2 oder 3 ist und
- n: 1, 2, 3 oder 4 ist,
und 0,001 bis 0,4, bevorzugt 0,001 bis 0,4 Gewichtsteile
einer oder mehrerer verschiedener Verbindungen der Formel (II) 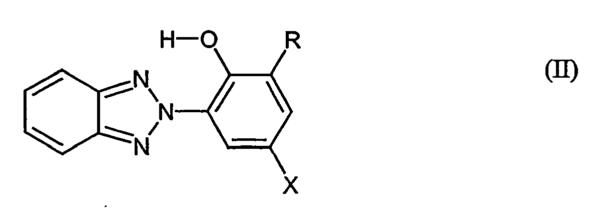 worin
R und X gleich oder verschieden H oder Alkyl oder Alkylaryl sind,
in Zusammensetzungen enthaltend thermoplastische Kunststoffe zur Verbesserung der Extrusionseigenschaften dahingehend, dass bei der Extrusion der Zusammensetzungen zu Platten ein gute Qualität der Oberfläche der extrudierten Platten erhalten wird.

Die erfindungsgemäße Aufgabe wird weiterhin gelöst durch die Verwendung von Mischungen enthaltend
0,1 bis 15 Gewichtsteile
einer oder mehrerer verschiedener Verbindungen der Formel (III) 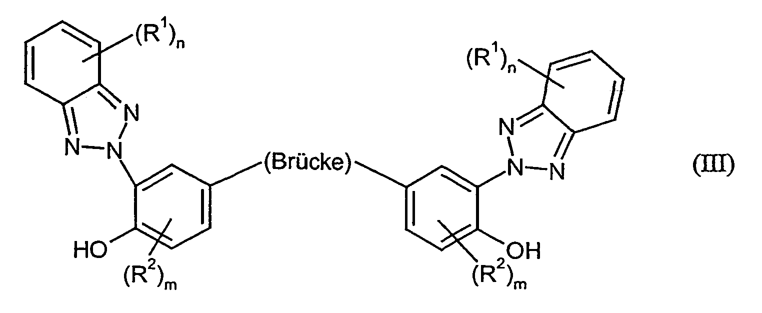 worin
- R¹ und R²: gleich oder verschieden sind und H, Halogen, C₁- bis C₁₀-Alkyl, C₅- bis C₁₀-Cycloalkyl, C₇- bis C₁₃-Aralkyl, C₆- bis C₁₄-Aryl, -OR⁵ oder -(CO)-O-R⁵ bedeuten, mit
R⁵ gleich H oder C₁- bis C₄-Alkyl,
- m: 1, 2 oder 3 ist und
- n: 1, 2, 3 oder 4 ist,

Brücke gleich 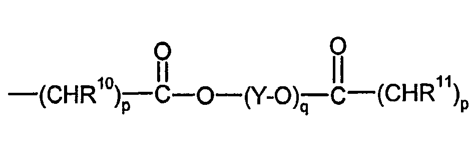 bedeutet, wobei
- p: gleich 0, 1, 2 oder 3 ist,
- q: eine ganze Zahl von 1 bis 10 ist,
- Y: -CH₂-CH₂-, -(CH₂)₃-, -(CH₂)₄-, -(CH₂)₅-, -(CH₂)₆-, oder CH(CH₃)-CH₂-ist und
- R¹⁰ und R¹¹: gleich oder verschieden sind und H, C₁- bis C₄-Alkyl, C₅- bis C₆₋Cycloalkyl, Benzyl oder C₆- bis C₁₄-Aryl bedeuten,
und 0,0001 bis 0,4 Gewichtsteile, bevorzugt 0,001 bis 0,4 Gewichtsteile
einer oder mehrerer verschiedener Verbindungen der genannten Formel (II)

in Zusammensetzungen enthaltend thermoplastische Kunststoffe zur Verbesserung der Extrusionseigenschaften dahingehend, dass bei der Extrusion der Zusammensetzungen zu Platten ein gute Qualität der Oberfläche der extrudierten Platten erhalten wird.

Die Verwendung von Mischungen aus Verbindungen der Formel (I) und (II) bzw. (III) und (II) im Sinne der obigen Absätze bedeutet nicht zwangsläufig, dass die Verbindungen der Formel (I) und (II) bzw. (III) und (II) zuerst untereinander gemischt werden müssen, bevor sie zur Stabilisierung von thermoplastischen Kunststoffen gegen UV-Strahlung eingesetzt werden. Jede Verwendung, die dazu führt, dass Verbindungen der Formel (I) und Verbindungen der Formel (II) bzw. Verbindungen der Formel (III) und Verbindungen der Formel (II) gleichzeitig in thermoplastischen Kunststoffen zum UV-Schutz wirksam sind, ist erfindungsgemäß möglich. Beispielsweise können dem thermoplastischen Kunststoff erst Verbindungen der Formel (II) und danach Verbindungen der Formel (I) zugeführt werden.

Weiterhin wird die erfindungsgemäße Aufgabe gelöst durch eine Zusammensetzung enthaltend thermoplastische Kunststoffe und 0,1 bis 15 Gew.-%, bevorzugt 0,11 bis 10 Gew.-%, besonders bevorzugt 0,13 bis 8 Gew.-%,
eine oder mehrere verschiedene Verbindungen der Formel (I)
und 0,001 bis 0,4 Gew.-%, sehr bevorzugt 0,0015 bis 0,35 Gew.-%, besonders bevorzugt 0,002 bis 0,3 Gew.-%,
eine oder mehrere verschiedene Verbindungen der Formel (II).

Weiterhin wird die erfindungsgemäße Aufgabe gelöst durch eine Zusammensetzung enthaltend
thermoplastische Kunststoffe und 0,1 bis 15 Gew.-%, bevorzugt 0,11 bis 10 Gew.-%, besonders bevorzugt 0,13 bis 8 Gew.-%,
eine oder mehrere verschiedene Verbindungen der allgemeinen Formel (III)
und 0,0001 bis 0,4 Gewichtsteile, bevorzugt 0,001 bis 0,4 Gew.-%, sehr bevorzugt 0,0015 bis 0,35 Gew.-%, besonders bevorzugt 0,002 bis 0,3 Gew.-%
eine oder mehrere verschiedene Verbindungen der Formel (II).

Unter den Verbindungen der Formel (I), (II) und (III) sind diejenigen bevorzugt mit
R¹ = H, R² = C₁- bis C₈-Alkyl, besonders R² = Isooctyl, R³ = H, R⁴= H, m= 1, n = 4, R = H oder 2-Butyl oder tert.-Butyl oder -C(CH₃)₂-Phenyl, X = C₁- bis C₈₋Alkyl oder -C(CH₃)₂-Phenyl oder Isooctyl, p = 0, 1, 2 oder 3, q =1 bis 8, Y = -(CH₂)₆- oder -(CH₂)₂-, R¹⁰ = H und R¹¹ = H.

Bevorzugt ist eine Zusammensetzung, in der die Summe aus thermoplastischen Kunststoffen und Verbindungen nach Formel (I) und Verbindungen nach Formel (II) und Verbindungen nach Formel (III) in der Zusammensetzung 50 bis 100 Gew.-% beträgt.

Erfindungsgemäß können beliebige thermoplastische Kunststoffe eingesetzt werden. Bevorzugt sind thermoplastische Kunststoffe ausgewählt aus der Gruppe bestehend aus Polycarbonat, Polyester, Polymethylmethacrylat, transparentes Polyvinylchlorid, transparentes Polystyrol, SAN und High Impact Polystyrol.

Besonders bevorzugt sind Polyester, insbesondere Polyethylenterephthalat (PET) und Copolyester aus Terephthalsäure, Isophthalsäure, Glycol und Cyclohexan-1,4-dimethanol (z.B. PETG).

Weiterhin besonders bevorzugt ist Polycarbonat, das ausgewählt ist aus der Gruppe bestehend aus Bisphenol A Homopolycarbonat und Copolycarbonate auf Basis der beiden Monomere Bisphenol A und 1,1-Bis-(4-hydroxyphenyl)-3,3,5-trimethylcyclohexan.

Weiterhin bevorzugt ist eine erfindungsgemäße Zusammensetzung die zusätzlich 0,01 bis 0,6 Gew.-% Ester oder Teilesteer von ein- bis sechswertigen Alkoholen enthält.

Weiterhin bevorzugt ist eine erfindungsgemäße Zusammensetzung die zusätzlich 10 bis 6000 ppm Thermostabilisatoren enthält.

Dabei sind die Thermostabilisatoren bevorzugt ausgewählt aus der Gruppe bestehend aus Tris-(2,4-di-tert.butylphenyl)phosphit und Triphenylphosphin.

Weiterhin wird die erfindungsgemäße Aufgabe gelöst durch ein Erzeugnis enthaltend eine erfindungsgemäße Zusammensetzung.

Das erfindungsgemäße Erzeugnis ist bevorzugt ausgewählt aus der Gruppe bestehend aus einschichtiger Platte, mehrschichtiger Platte, mehrschichtiger Stegplatte, gewellter Massivplatte, Stegprofil, Stegprofil mit Nut und Feder, Verbindungssystem, Verscheibung für Gewächshäuser, Verscheibung für Wintergärten, Verscheibung für Bushaltestellen, Reklametafel, Schild, Schutzscheibe, Automobilverscheibung, Fenster und Überdachung.

Bevorzugt ist eine mehrschichtige Platte, wobei mindestens eine Schicht eine erfindungsgemäße Zusammensetzung enthält.

Weiterhin bevorzugt ist eine mehrschichtige Platte, wobei eine der äußersten Schichten der Platte oder beide äußerste Schichten der Platte eine erfindungsgemäße Zusammensetzung enthalten.

Dabei ist es besonders bevorzugt, dass die Platte mindestens zwei Schichten hat und dass mindestens eine der Schichten eine erfindungsgemäße Zusammensetzung enthält, deren Gehalt an Verbindungen nach Formel (I) und Verbindungen nach Formel (II) bzw. Verbindungen nach Formel (III) und Verbindungen nach Formel (II) in Summe bevorzugt 0,02 bis 1 Gew.-% beträgt.

Das bevorzugte Verfahren zur Herstellung der erfindungsgemäßen Platten ist die Coextrusion.

Zusätzlich können die erfindungsgemäßen Zusammensetzungen übliche Additive, insbesondere übliche Verarbeitungshilfsmittel, insbesondere Entformungsmittel und Fließmittel sowie Stabilisatoren, insbesondere Thermostabilisatoren, enthalten.

Im Rahmen der vorliegenden Erfindung werden die Verbindungen gemäß Formel (I), (III) und (III) der Einfachheit halber als UV-Absorber bezeichnet.

Die erfindungsgemäßen Zusammensetzungen und die daraus hergestellten Erzeugnisse, insbesondere Platten, haben zahlreiche Vorteile. Die aus dem Stand der Technik bekannten Probleme, wie z.B. das Absetzen flüchtiger Bestandteile aus den Zusammensetzungen an Kalibratoren oder Walzen bei der Extrusion, treten nicht auf. Dieser Vorteil der erfindungsgemäßen Zusammensetzungen tritt besonders dann auf, wenn die erfindungsgemäßen Zusammensetzungen zur Herstellung mehrschichtiger Platten verwendet werden, wobei eine oder beide der äußeren Schichten der Platten aus den erfindungsgemäßen Zusammensetzungen bestehen oder diese enthalten. Für diesen Fall beträgt der Anteil an UV-Absorber in den erfindungsgemäßen Zusammensetzungen in der einen oder in beiden äußeren Schichten, bevorzugt 3 bis 8 Gew.-%. Die erfindungsgemäßen Zusammensetzungen sind gut gegen UV-Strahlung geschützt.

Die erfindungsgemäßen Zusammensetzungen und die daraus hergestellten Erzeugnisse haben darüber hinaus zahlreiche weitere Vorteile. Beispielsweise haben die erfindungsgemäßen Erzeugnisse gute mechanische Eigenschaften, die im wesentlichen denen des verwendeten thermoplastischen Kunststoffes entsprechen. Darüber hinaus haben die erfindungsgemäßen Erzeugnisse für den Fall, dass transparente thermoplastische Kunststoffe eingesetzt werden, gute optische Eigenschaften, beispielsweise hohe Transparenz.

Die erfindungsgemäßen Zusammensetzungen enthaltend thermoplastische Kunststoffe haben sich technisch besonders vorteilhaft erwiesen. Sie lassen sich problemlos verarbeiten und zeigen in den als Produkt erhaltenen Erzeugnisse keine Beeinträchtigungen.

Die Witterungsbeständigkeit entspricht mindestens der von Platten, die nach dem Stand der Technik hergestellt worden sind.

Die erfindungsgemäß zu verwendenden Verbindungen nach Formel (I), (II) und (III) sind kommerziell erhältlich. Sie lassen sich nach bekannten Verfahren herstellen.

Die Summe der Gewichtsanteile aus thermoplastischen Kunststoffen und UV-Absorber in den erfindungsgemäßen Zusammensetzungen ist bevorzugt 60 bis 100 Gew.-%, besonders bevorzugt 80 bis 100 Gew.-%, ganz besonders bevorzugt 90 bis 100 Gew.-%.

Die erfindungsgemäßen Zusammensetzungen können neben den explizit genannten Bestandteilen noch übliche Additive in den üblchen Mengen enthalten. Eine besonders bevorzugte Ausführungsform der Erfindung ist gegeben, wenn neben den explizit genannten Bestandteilen keine weiteren Bestandteile in den erfindungsgemäßen Zusammensetzungen enthalten sind, d.h. wenn die erfindungsgemäßen Zusammensetzungen aus den explizit genannten Bestandteilen bestehen.

Verbindungen der Formel (I) wie 2,2-Methylen-bis-(4-(1,1,3,3-tetramethylbutyl)-6-(2H-benztriazol-2-yl)phenol), werden im Handel unter der Bezeichnung Tinuvin® 360 oder Adeka Stab® LA 31 vertrieben. Verbindungen der Formel (II) sind 2-(2-Hydroxy-5-tert-octylphenyl)-2H-benzotriazol (Tinuvin® 329), 2-(2H-benzotriazol-2-yl)-4-(1,1-dimethylethyl)-6-(2-methylpropyl)-phenol (Tinuvin® 350) oder 2-[2'-Hydroxy-3,5-di(1,1-dimethylbenzyl)phenyl]-2H-benzotriazol (Tinuvin® 234).

Die Tinuvine sind erhältlich von der Firma Ciba Spezilitätenchemie, Lampertheim, Deutschland.

Polycarbonate für die erfindungsgemäßen Zusammensetzungen oder die daraus erhältlichen Erzeugnisse sind Homopolycarbonate, Copolycarbonate und thermoplastische Polyestercarbonate. Sie haben bevorzugt mittlere Molekulargewichte M̅_{w} von 18.000 bis 40.000, vorzugsweise von 26.000 bis 36.000 und insbesondere von 28.000 bis 35.000 g/mol, ermittelt durch Messung der rel. Lösungsviskosität in Dichlormethan oder in Mischungen gleicher Gewichtsmengen Phenol/o-Dichlorbenzol geeicht durch Lichtstreuung. Dabei soll im Falle der Coextrusion die Schmelzeviskosität der Coextrusionsmassen vorzugsweise kleiner sein als die des Substrates, auf die sie aufgebracht werden.

Zur Herstellung von Polycarbonaten sei beispielhaft auf "Schnell", Chemistry and Physics of Polycarbonates, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und auf U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'- Bis(hydroxyphenyl)- diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl)diphenol, 1,1-Bis-(4-hydroxyphenyl)-3,3,5-trimethylcyclohexan (BP-TMC) sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsüure, Isophthalsäure, 3,3'- oder 4,4'-Diphenyldicarbonsäure und Benzophenondicarbonsäuren. Ein Teil, bis zu 80 Mol.-%, vorzugsweise von 20 bis 50 Mol.-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol.-%, bezogen auf eingesetzte Diphenole, an Verzweigern bzw. Mischungen der Verzweiger, können mit den Diphenolen zusammen eingesetzt werden aber auch in einem späteren Stadium der Synthese zugegeben werden.

Als Kettenabbrecher, die ebenfalls verwendet werden können, werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol.-% bevorzugt 2-10 Mol.-% je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzeumesterungsprozess ist in DE-A 42 38 123 beispielhaft beschrieben.

Die erfindungsgemäßen Zusammensetzungen können auch Stabilisatoren enthalten.

Geeignete Stabilisatoren für die erfindungsgemäßen Zusammensetzungen sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Ferner können die erfindungsgemäßen Zusammensetzungen enthaltend Polycarbonat 0,01 bis 0,6 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.

Ein zweiwertiger Alkohol ist beispielsweise Glycol.
Ein dreiwertiger Alkohol ist beispielsweise Gylcerin.
Vierwertige Alkohole sind beispielsweise Pentaerythrit und Mesoerythrit.
Fünfwertige Alkohole sind beispielsweise Arabit, Ribit und Xylit.

Sechswertige Alkohole sind beispielsweise Mannit, Glucit (Sorbit) und Dulcit.

Die Ester sind bevorzugt die Monoester, Diester, Triester, Tetraester gegebenenfalls Pentaester und Hexaester oder deren Mischungen, insbesondere statistische Mischungen, aus gesättigten, aliphatischen C₁₀- bis C₃₆-Monocarbonsäuren und gegebenenfalls Hydroxy-Monocarbonsäuren, vorzugsweise mit gesättigten, aliphatischen C₁₄- bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt bis zu 60 % unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Pahnitinsäure, Stearinsäure und Hydroxystearinsäure.

Die gesättigten, aliphatischen C₁₀- bis C₃₆-Carbonsäuren und die erfindungsgemäß einzusetzenden Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Beispiele für Antistatika, die in den erfindungsgemäßen Zusammensetzungen enthalten sein können, sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Ferner können die erfindungsgemäßen Zusammensetzungen organische Farbstoffe, anorganische Farbpigmente, Fluoreszenzfarbstoffe und optische Aufheller enthalten.

Alle für die Synthese der erfindungsgemäßen Coextrusionsmassen verwandten Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Zusammensetzungen enthaltend Polycarbonat insbesondere der UV-Absorber und weiterer vorgenannter Additive erfolgt bevorzugt in bekannter Weise durch Vermischen von Polymergranulat mit den Zusätzen bei Temperaturen von bevorzugt etwa 200 bis 360°C in üblichen Aggregaten wie Innenknetem, Einschneckenextrudern und Doppelwellenextrudern beispielsweise durch Schmelzecompoundierung oder Schmelzeextrusion oder durch Vermischen der Lösungen des Polymers mit Lösungen der Additive und anschlie-βende Verdampfung der Lösungsmittel in bekannter Weise. Der Anteil der Additive in der Formmasse kann in weiten Grenzen variiert werden und richtet sich nach den gewünschten Eigenschaften der Zusammensetzungen. Der Gesamtanteil der Additive in den Zusammensetzungen beträgt bevorzugt etwa bis zu 20 Gew.-%, vorzugsweise 0,1 bis 12 Gew.-%, bezogen auf das Gewicht der Zusammensetzung.

Die Einarbeitung der UV-Absorber in die erfindungsgemäßen Zusammensetzungen kann beispielsweise auch geschehen durch Vermischen von Lösungen der UV-Absorber und gegebenenfalls weiterer vorgenannter Additive mit Lösungen der Kunststoffe in geeigneten organischen Lösungsmitteln wie CH₂Cl₂, Halogenalkanen, Halogenaromaten, Chlorbenzol und Xylolen. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion entfernt, beispielsweise compoundiert.

Gegenstand der Erfindung sind auch Erzeugnisse, die unter Mitverwendung der erfindungsgemäßen Zusammensetzungen enthaltend thermoplastische Kunststoffe hergestellt worden sind. Die Zusammensetzungen enthaltend thermoplastische Kunststoffe können zur Erzeugung von massiven Kunststoffplatten und sogenannten Stegplatten (z.B. Stegdoppelplatten oder Stegdreifachplatten) eingesetzt werden. Die Platten umfassen also auch solche, die auf einer Seite oder beiden Seiten eine zusätzliche Deckschicht mit der erfindungsgemäßen Zusammensetzungen enthaltend thermoplastische Kunststoffe mit einem erhöhten UV-Absorbergehalt aufweisen.

Die erfindungsgemäßen Zusammensetzungen enthaltend thermoplastische Kunststoffe erlauben die erleichterte Herstellung von Erzeugnissen, insbesondere von Platten und aus ihnen hergestellte Erzeugnisse wie z.B. Verscheibungen für Gewächshäuser, Wintergärten, Bushaltestellen, Reklametafeln, Schilder, Schutzscheiben, Automobilverscheibungen, Fenster und Überdachungen.

Nachträgliche Bearbeitungen der mit der erfindungsgemäßen Zusammensetzungen enthaltend thermoplastische Kunststoffe beschichteten Erzeugnisse, wie z.B. Tiefziehen oder Oberflächenbearbeitungen, wie z.B. Ausrüstung mit Kratzfestlacken, wasserspreitenden Schichten und ähnliches sind möglich und die durch diese Verfahren hergestellten Erzeugnisse sind ebenfalls Gegenstand der vorliegenden Erfindung.

Die Coextrusion als solche ist literaturbekannt (siehe beispielsweise EP-A 110 221 und EP-A 110 23 8). Im vorliegenden Fall wird vorzugsweise wie folgt verfahren:

An einem Coextrusionsadapter sind Extruder zur Erzeugung der Kernschicht und der Deckschicht(en) angeschlossen. Der Adapter ist so konstruiert, dass die die Deckschicht(en) formende Schmelze als dünne Schicht haftend auf die Schmelze der Kernschicht aufgebracht werden.

Der so erzeugte, mehrschichtige Schmelzestrang wird dann bevorzugt in der anschließend angeschlossenen Düse in die gewünschte Form (Steg- oder Massivplatte) gebracht. Anschließend wird bevorzugt in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt sein, dass dort die Zusammenführung der Schmelzen erfolgt.

Die Erfindung wird durch das folgende Beispiel weiter erläutert.

### Beispiel

10 mm Stegdoppelplatten A bis C, wie sie beispielweise in EP-A 0 110 238 beschrieben sind, wurden aus folgenden Zusammensetzungen enthaltend Polycarbonat erhalten: Als Basismaterial wurde Makrolon® 1143 (verzweigtes Bisphenol-A Polycarbonat der Bayer AG, Leverkusen, Deutschland mit einem Schmelzflussindex (MFR) von 3,0 g/10 min bei 300°C und 1,2 kg Belastung) verwendet. Coextrudiert wurde dieses mit den in der Tabelle angegebenen Compounds auf Basis Makrolon® 3208 (lineares Bisphenol-A Polycarbonat der Bayer AG, Leverkusen, Deutschland mit einem Schmelzflussindex (MFR) von 4,5 g/10 min bei 300°C und 1,2 kg Belastung).

Die Dicke der Coex-Schicht betrug jeweils etwa 50 µm.

| **Platte** | **Tinuvin 360***^{**)**} | **Weiterer UV-Absorber** | **Entformungsmittel** |
|---|---|---|---|
| **A** | 10% | 0,25 % Tinuvin 350***⁾ | 0,25 % PETS**⁾ |
| **B** | 10 % | 0,10 % Tinuvin 329****⁾ | 0,25 % PETS**⁾ |
| **C** | 10 % | 0,25 % Tinuvin 329****⁾ | 0,25 % PETS**⁾ |
| **D** | 10 % | 0,25 % Tinuvin 234*****⁾ | 0,25 % PETS**⁾ |
| **E** | 10 % | - | 0,25 % PETS**⁾ |
| **F** | 5 % | - | 0,25 % PETS**⁾ |
| **G** | 5% | 0,23 T Tin 350***⁾ | 0,25 % PETS**⁾ |

| | | | |
|---|---|---|---|
| *) 2,2-Methylenbis-(4-(1,1,3,3-tetramethylbutyl)-6-(2H-benztriazol-2-yl)phenol); im Handel erhältlich von der Firma Ciba Spezialitätenchemie, Lampertheim, Deutschland; fällt unter Formel (I) | | | |
| **) Pentaerythrittetrastearat im Handel erhältlich als Loxiol VPG 861 der Firma Cognis, Düsseldorf, Deutschland | | | |
| ***) 2-(2H-benzotriazol-2-yl)-4-(1,1-dimethylethyl)-6-(2-methylpropyl)-phenol; im Handel erhältlich von der Firma Ciba Spezialitätenchemie, Lampertheim, Deutschland; fällt unter Formel (II) | | | |
| ****) 2-(2-Hydroxy-5-tert-octylphenyl)-2H-benzotriazol; im Handel erhältlich von der Firma Ciba Spezialitätenchemie, Lampertheim, Deutschland; fällt unter Formel (II) | | | |
| *****) 2-[2'-Hydroxy-3,5-di(1,1-dimethylbenzyl)phenyl]-2H-benzotriazol; im Handel erhältlich von der Firma Ciba Spezialitätenchemie, Lampertheim, Deutschland; fällt unter Formel (II) | | | |

Die verwendeten Maschinen und Apparate zur Herstellung der Compounds und zur folgenden Herstellung von mehrschichtigen Stegplatten werden im folgenden beschrieben:

Die Einrichtung zur Compoundierung bestand aus:
- Dosiereinrichtung für die Komponenten
- Einem gleichlaufenden Zweiwellenkneter (ZSK 53 von der Firma Werner & Pfleiderer) mit einem Schneckendurchmesser von 53 mm
- Einer Lochdüse zur Ausformung von Schmelzesträngen
- Einem Wasserbad zur Abkühlung und dem Verfestigen der Stränge
- Einem Granulator.

Die verwendeten Maschinen und Apparate zur Herstellung von mehrschichtigen Stegplatten werden im Folgenden beschrieben:

Die Einrichtung bestand aus
- dem Hauptextruder mit einer Schnecke der Länge 33 D und einem Durchmesser von 70 mm mit Entgasung
- dem Coexadapter (Feedblocksystem)
- einem Coextruder zum Aufbringen der Deckschicht mit einer Schnecke der Länge 25 D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Das Polycarbonat-Granulat des Basismaterials wurde dem Fülltrichter des Hauptextruders zugeführt, das UV-Coextrusionsmaterial dem des Coextruders. Im jeweiligen Plastifiziersystem Zylinder/Schnecke erfolgte das Aufschmelzen und Fördern des jeweiligen Materials. Beide Materialschmelzen wurden im Coexadapter zusammengeführt und bildeten nach Verlassen der Düse und Abkühlen im Kalibrator einen Verbund. Die weiteren Einrichtungen dienten dem Transport, Ablängen und Ablegen der extrudierten Platten.

### Coextrusion mit E (Referenz):

- großflächige Oberflächenstörungen, die die Plattenqualität negativ beeinflussen nach 75 min
⇒ Note: schlecht

### Coextrusion mit A:

- großflächige Oberflächenstörungen, die die Plattenqualität negativ beeinflussen nach 230 min
⇒ Note: gut

### Coextrusion mit B:

- großflächige Oberflächenstörungen, die die Plattenqualität negativ beeinflussen nach 190 min
⇒ Note: gut bis befriedigend

### Coextrusion mit C:

- großflächige Oberflächenstörungen, die die Plattenqualität negativ beeinflussen nach 220 min
⇒ Note: gut

### Coextrusion mit D:

- großflächige Oberflächenstörungen, die die Plattenqualität negativ beeinflussen nach 120 min
⇒ Note: befriedigend

### Coextrusion mit F (Referenz):

- großflächige Oberflächenstörungen, die die Plattenqualität negativ beeinflussen nach 260 min
⇒ Note: befriedigend

### Coextrusion mit G:

- großflächige Oberflächenstörungen, die die Plattenqualität negativ beeinflussen traten während der Versuchsdauer von 5 h nicht auf
⇒ Note: sehr gut

## Patentansprüche

1. Verwendung von Mischungen enthaltend 0,1 bis 15 Gewichtsteile,
eine oder mehrere verschiedene Verbindungen der Formel (I) 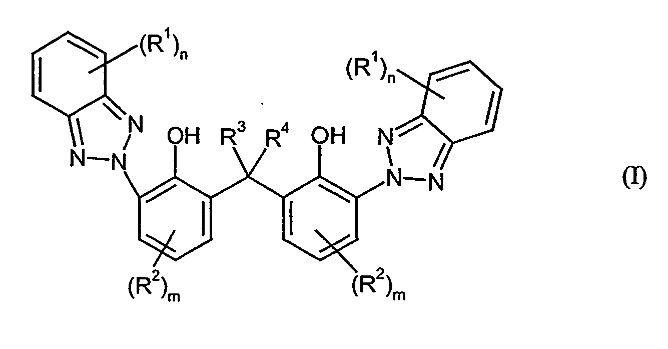 worin
R¹ und R² gleich oder verschieden sind und H, Halogen, C₁- bis C₁₀-Alkyl, C₅- bis C₁₀-Cyloalkyl, C₇- bis C₁₃-Aralkyl, C₆- bis C₁₄-Aryl, -OR⁵ oder -(CO)-O-R⁵ bedeuten, mit
R⁵ gleich H oder C₁- bis C₄-Alkyl,
R³ und R⁴ gleich oder verschieden sind und H, C₁- bis C₄-Alkyl, C₅- bis C₆₋Cycloalkyl, Benzyl oder C₆- bis C₁₄-Aryl bedeuten,
m 1, 2 oder 3 ist und
n 1, 2, 3 oder 4 ist,
und 0,0001 bis 0,4 Gewichtsteile,
eine oder mehrere verschiedene Verbindungen der Formel (II) 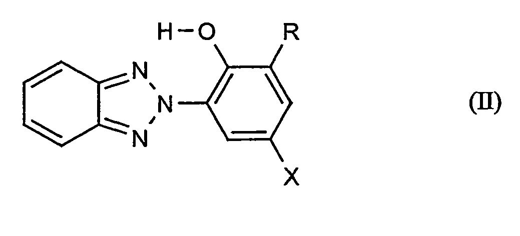 worin
R und X gleich oder verschieden H oder Alkyl oder Alkylaryl sind,
in Zusammensetzungen enthaltend thermoplastische Kunststoffe zur Verbesserung der Extrusionseigenschaften dahingehend, dass bei der Extrusion der Zusammensetzungen zu Platten eine gute Qualität der Oberfläche der extrudierten Platten erhalten wird.

2. Verwendung von Mischungen enthaltend 0,1 bis 15 Gewichtsteile,
eine oder mehrere verschiedene Verbindungen der allgemeinen Formel (III) 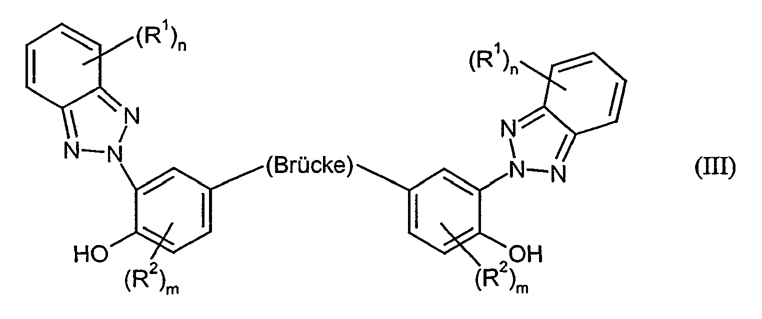 worin
R¹ und R² gleich oder verschieden sind und H, Halogen, C₁- bis C₁₀-Alkyl, C₅- bis C₁₀-Cycloalkyl, C₇- bis C₁₃-Aralkyl, C₆- bis C₁₄-Aryl, -OR⁵ oder -(CO)-O-R⁵ bedeuten, mit
R⁵ gleich H oder C₁- bis C₄-Alkyl,
m 1, 2 oder 3 ist und
n 1, 2, 3 oder 4 ist,
Brücke gleich 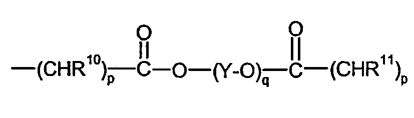 bedeutet, wobei
p gleich 0, 1, 2 oder 3 ist,
q eine ganze Zahl von 1 bis 10 ist,
Y -CH₂-CH₂-, -(CH₂)₃-, -(CH₂)₄-, -(CH₂)₅-, -(CH₂)₆-, oder CH(CH₃)-CH₂-ist und
R¹⁰ und R¹¹ gleich oder verschieden sind und H, C₁- bis C₄-Alkyl, C₅- bis C₆-Cycloalkyl, Benzyl oder C₆- bis C₁₄-Aryl bedeuten,
und 0,0001 bis 0,4 Gewichtsteile,
eine oder mehrere verschiedene Verbindungen der Formel (II) nach Anspruch 1
in Zusammensetzungen enthaltend thermoplastische Kunststoffe zur Verbesserung der Extrusionseigenschaften dahingehend, dass bei der Extrusion der Zusammensetzungen zu Platten ein gute Qualität der Oberfläche der extrudierten Platten erhalten wird.

3. Zusammensetzung enthaltend
thermoplastische Kunststoffe und 0,1 bis 15 Gew.-%
eine oder mehrere verschiedene Verbindungen der Formel (I) nach Anspruch 1
und 0,0001 bis 0,4 Gew.-%
einer oder mehrerer verschiedener Verbindungen der Formel (II) nach Anspruch 1.

4. Zusammensetzung enthaltend
thermoplastische Kunststoffe und 0,1 bis 15 Gew.-%
eine oder mehrere verschiedene Verbindungen der Formel (III) nach Anspruch 2
und 0,0001 bis 0,4 Gew.-%
eine oder mehrere verschiedene Verbindungen der allgemeinen Formel (II) nach Anspruch 1.

5. Zusammensetzung nach Anspruch 3, wobei der Anteil der Verbindungen der Formel (I) 0,11 bis 10 Gew.-% und der Anteil der Verbindungen der Formel (II) 0,015 bis 0,35 Gew.-% beträgt.

6. Zusammensetzung nach Anspruch 4, wobei der Anteil der Verbindungen nach Formel (III) 0,11 bis 10 Gew.-% und der Anteil der Verbindungen nach Formel (II) 0,015 bis 0,35 Gew.-% beträgt.

7. Zusammensetzung nach einem der Ansprüche 3 bis 6, wobei die Summe aus thermoplastischen Kunststoffen und Verbindungen nach Formel (I) und Verbindungen nach Formel (II) und Verbindungen nach Formel (III) in der Zusammensetzung 60 bis 100 Gew.-% beträgt.

8. Zusammensetzung nach einem der Ansprüche 3 bis 7, wobei der thermoplastische Kunststoff ausgewählt ist aus der Gruppe bestehend aus Bisphenol A Homopolycarbonat und Copolycarbonate auf Basis der beiden Monomere Bisphenol A und 1,1-Bis-(4-hydroxyphenyl)-3,3,5-trimethylcyclohexan.

9. Zusammensetzung nach einem der Ansprüche 3 bis 7, wobei der thermoplastische Kunststoff PETG ist.

10. Zusammensetzung nach einem der Ansprüche 3 bis 9, wobei die Zusammensetzung zusätzlich 0,01 bis 0,6 Gew.-% Ester oder Teilester von ein- bis sechswertigen Alkoholen enthält.

11. Zusammensetzung nach einem der Ansprüche 3 bis 10, wobei die Zusammensetzung zusätzlich 10 bis 6000 ppm Thermostabilisatoren enthält.

12. Zusammensetzung nach Anspruch 11, wobei der Thermostabilisator ausgewählt ist aus der Gruppe bestehend aus Tris-(2,4-di-tert.butylphenyl)phosphit und Triphenylphoshphin.

13. Verfahren zur Herstellung von einschichtigen oder mehrschichtigen Platten, wobei mindestens eine Schicht eine Zusammensetzung nach einem der Anspruch 3 bis 12 enthält, durch Extrusion oder Coextrusion.

14. Erzeugnis enthaltend eine Zusammensetzung gemäß einem der Ansprüche 3 bis 12.

15. Erzeugnis nach Anspruch 14, ausgewählt aus der Gruppe bestehend aus einschichtiger Platte, mehrschichtiger Platte, mehrschichtiger Stegplatte, gewellter Massivplatte, Stegprofil, Stegprofil mit Nut und Feder, Verbindungssystem, Verscheibung für Gewächshäuser, Verscheibung für Wintergärten, Verscheibung für Bushaltestellen, Reklametafel, Schild, Schutzscheibe, Automobilverscheibung, Fenster und Überdachung.

16. Erzeugnis nach Anspruch 14, **dadurch gekennzeichnet, dass** es sich um eine mehrschichtige Platte, wobei mindestens eine Schicht eine Zusammensetzung nach einem der Ansprüche 3 bis 12 enthält, handelt.

17. Mehrschichtige Platte nach Anspruch 16, wobei eine der äußersten Schichten der Platte oder beide äußerste Schichten der Platte eine Zusammensetzung nach einem der Ansprüche 3 bis 12 enthalten.

18. Mehrschichtige Platte nach Anspruch 17, wobei der thermoplastische Kunststoff Polycarbonat ist und wobei die Platte mindestens zwei Schichten hat und wobei mindestens eine der Schichten eine Zusammensetzung nach einem der vorgenannten Ansprüche und zudem weiteres Polycarbonat enthält.

## Claims

1. Use of mixtures containing 0.1 to 15 parts by weight,
one or more different compounds of Formula (I) 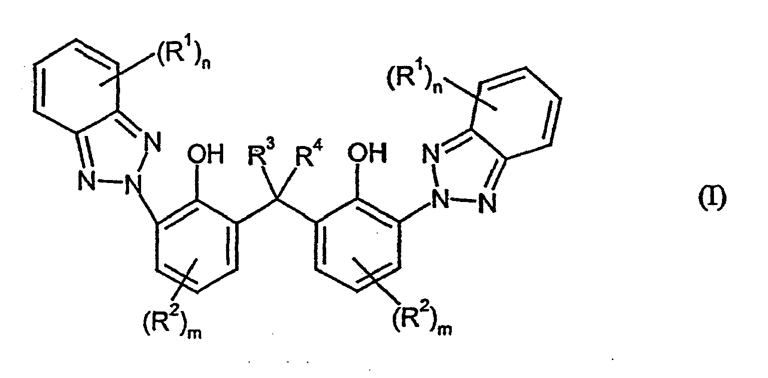 wherein
R¹ and R² are identical or different and represent H, halogen, C₁- to C₁₀-alkyl, C₅- to C₁₀-cycloalkyl, C₇- to C₁₃-aralkyl, C₆- to C₁₄-aryl, -OR⁵ or -(CO)-O-R⁵, where
R⁵ is H or C₁- to C₄-alkyl,
R³ and R⁴ are identical or different and represent H, C₁- to C₄-alkyl, C₅- to C₆₋cycloalkyl, benzyl or C₆- to C₁₄-aryl,
mis 1, 2 or 3 and
n is 1, 2, 3 or 4,
and 0.0001 to 0.4 parts by weight,
one or more different compounds of Formula (II) 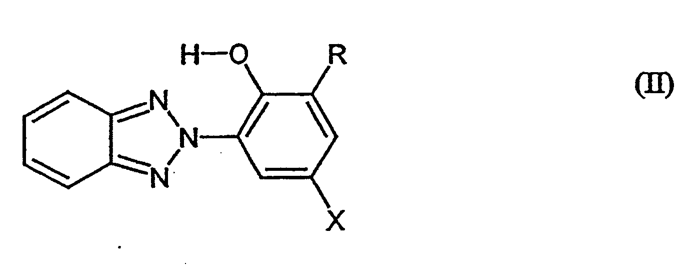 wherein
R and X are identical or different and are H or alkyl or alkylaryl,
in compositions containing thermoplastic polymers for improving the extrusion properties to the extent that, when extruding the compositions to form sheets, a good surface quality of the extruded sheets is obtained.

2. Use of mixtures containing 0.1 to 15 parts by weight,
one or more different compounds of general Formula (III) 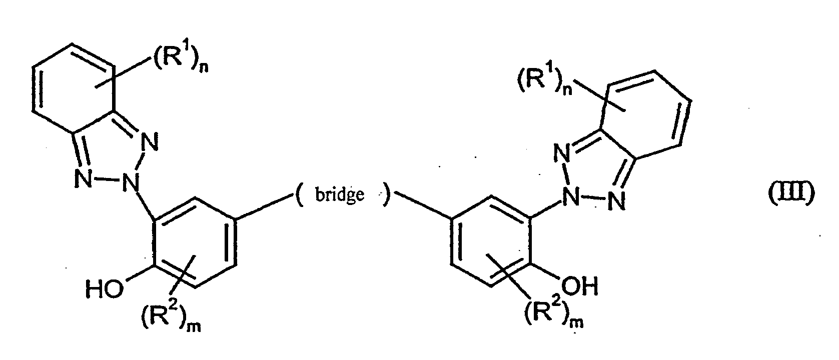 wherein
R¹ and R² are identical or different and represent H, halogen, C₁- to C₁₀-alkyl, C₅- to C₁₀-cycloalkyl, C₇- to C₁₃-aralkyl, C₆- to C₁₄-aryl, -OR⁵ or -(CO)-O-R⁵, where
R⁵ is H or C₁- to C₄-alkyl,
mis 1, 2 or 3 and
n is 1, 2, 3 or 4,
the bridge represents 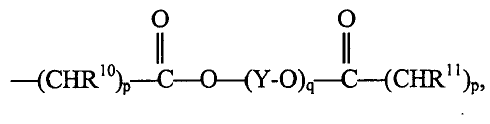 wherein
p is equal to 0, 1, 2 or 3,
q is an integer from 1 to 10,
Y is ―CH₂-CH₂-, -(CH₂)₃-, -(CH₂)₄-, -(CH₂)₅-, -(CH₂)₆-, or CH(CH₃)-CH₂- and
R¹⁰ and R¹¹ are identical or different and represent H, C₁- to C₄-alkyl, C₅- to C₆₋cycloalkyl, benzyl or C₆- to C₁₄-aryl
and 0.0001 to 0.4 parts by weight,
one or more different compounds of general Formula (II) according to claim 1
in compositions containing thermoplastic polymers for improving the extrusion properties to the extent that, when extruding the compositions to form sheets, a good surface quality of the extruded sheets is obtained.

3. Composition containing
thermoplastic polymers and 0.1 to 15 wt.%
one or more different compounds of Formula (I) according to claim 1
and 0.0001 to 0.4 wt.%
of one or more different compounds of Formula (II) according to claim 1,

4. Composition containing
thermoplastic polymers and 0.1 to 15 wt.%
one or more different compounds of Formula (III) according to claim 2
and 0.0001 to 0.4 wt.%
one or more different compounds of general Formula (II) according to claim 1.

5. Composition according to claim 3, wherein the proportion of compounds of Formula (I) is 0.11 to 10 wt.% and the proportion of compounds of Formula (II) is 0.015 to 0.35 wt.%.

6. Composition according to claim 4, wherein the proportion of compounds according to Formula (III) is 0.11 to 10 wt.% and the proportion of compounds according to Formula (II) is 0.015 to 0.35 wt.%.

7. Composition according to any one of claims 3 to 6, wherein the sum of thermoplastic polymers and compounds according to Formula (I) and compounds according to Formula (II) and compounds according to Formula (III) in the composition is 60 to 100 wt.%.

8. Composition according to any one of claims 3 to 7, wherein the thermoplastic polymer is selected from the group consisting of bisphenol A homopolycarbonate and copolycarbonates based on the two monomers bisphenol A and 1,1-bis-(4-hydroxyphenyl)-3,3,5-trimethylcyclohexane.

9. Composition according to any one of claims 3 to 7, wherein the thermoplastic polymer is PETG.

10. Composition according to any one of claims 3 to 9, wherein the composition additionally contains 0.01 to 0.6 wt.% of esters or partial esters of monohydric to hexahydric alcohols.

11. Composition according to any one of claims 3 to 10, wherein the composition additionally contains 10 to 6,000 ppm of heat stabilisers.

12. Composition according to claim 11, wherein the heat stabiliser is selected from the group consisting of tris-(2,4-di-tert.butylphenyl)phosphite and triphenylphosphine.

13. Process for producing single layer or multilayer sheets, wherein at least one layer contains a composition according to any one of claims 3 to 12, by extrusion or coextrusion.

14. Product containing a composition according to any one of claims 3 to 12.

15. Product according to claim 14, selected from the group consisting of single-layer sheet, multilayer sheet, multilayer multi-wall sheet, corrugated solid sheet, multi-wall profiled part, multi-wall profiled part with tongue and groove, connecting system, glazing for greenhouses, glazing for conservatories, glazing for bus stops, advertising hoardings, sign, safety screen, motor car glazing, window and roofing.

16. Product according to claim 14, **characterised in that** it is a multilayer sheet, wherein at least one layer contains a composition according to any one of claims 3 to 12.

17. Multilayer sheet according to claim 16, wherein one of the outermost layers of the sheet or both outermost layers of the sheet contain a composition according to any one of claims 3 to 12.

18. Multilayer sheet according to claim 17, wherein the thermoplastic polymer is polycarbonate and wherein the sheet has at least two layers and wherein at least one of the layers contains a composition according to any one of the preceding claims and, in addition, a further polycarbonate.

## Revendications

1. Utilisation de mélanges contenant 0,1 à 15 parts en poids
d'un ou de plusieurs composés différents de la formule (1) 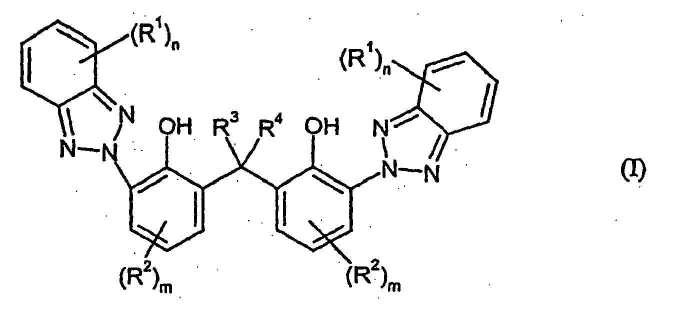 dans laquelle
R¹ et R² sont identiques ou différents et signifient un H, un halogène, un alkyle en C₁ à C₁₀, un cycloalkyle en C₅ à C₁₀, un arylalkyle en C₇ à C₁₃, un aryle en C₆ à C₁₄, -OR⁵ ou - (CO)-O-R⁵, avec
R⁵ égale H ou un alkyle en C₁ à C₄,
R³ et R⁴ sont identiques ou différents et signifient un H, un alkyle en C₁ à C₄, un cycloalkyle en C₅ ou C₆, un benzyle ou un aryle en C₆ à C₁₄,
m est égal à 1, 2 ou 3 et
n est égal à 1, 2, 3 ou 4,
et 0,0001 à 0,4 part en poids
d'un ou de plusieurs composés différents de la formule (II) 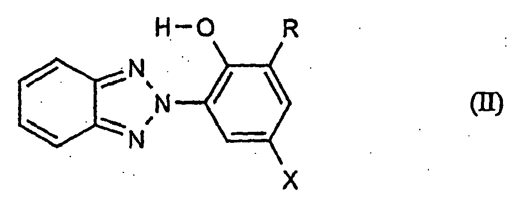 dans laquelle
R et X identiques ou différents, sont un H, un alkyle ou un alkylaryle,
dans des compositions contenant des matières plastiques thermoplastiques pour l'amélioration des propriétés d'extrusion de telle sorte que, lors de l'extrusion des compositions pour donner des plaques, une bonne qualité de la surface des plaques extrudées soit obtenue.

2. Utilisation de mélanges contenant de 0,1 à 15 parts en poids
d'un ou de plusieurs composés différents de la formule générale (III) 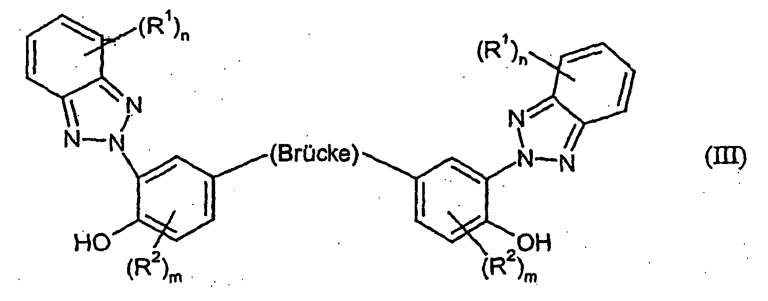 dans laquelle
R¹ et R² sont identiques ou différents et signifient un H, un halogène, un alkyle en C₁ à C₁₀, un cycloalkyle en C₅ à C₁₀, un arylalkyle en C₇ à C₁₃, un aryle en C₆ à C₁₄, -OR⁵ ou - (CO)-O-R⁵, avec
R⁵ égale H ou un alkyle en C₁ à C₄,
m est égal à 1, 2 ou 3 et
n est égal à 1, 2, 3 ou 4,
Brücke signifie 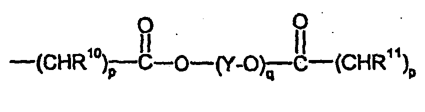 dans laquelle
p est égal à 0, 1, 2 ou 3,
q est un nombre entier de 1 à 10
Y est -CH₂-CH₂-, -(CH₂)₃-, -(CH₂)₄-, -(CH₂)₅-, -(CH₂)₆- ou CH(CH₃)-CH₂- et
R¹⁰ et R¹¹ sont identiques ou différents et signifient un H, un alkyle en C₁ à C₄, un cycloalkyle en C₅ ou C₆, un benzyle ou un aryle en C₆ à C₁₄,
et 0,0001 à 0,4 part en poids,
d'un ou de plusieurs composé différents de la formule (II) selon la revendication 1
dans des compositions contenant des matières plastiques, thermoplastiques pour l'amélioration des propriétés d'extrusion de telle sorte que, lors de l'extrusion des compositions pour donner des plaques, une bonne qualité de la surface des plaques extrudées soit obtenue.

3. Composition contenant
des matières plastiques, thermoplastiques et 0,1 à 15 % en poids d'un ou de plusieurs composés différents de la formule (I) selon la revendication 1
et 0,0001 à 0,4 % en poids
d'un ou de plusieurs composés différents de la formule (II) selon la revendication 1.

4. Composition contenant
des matières plastiques, thermoplastiques et 0,1 à 15 % en poids
d'un ou de plusieurs composés différents de la formule (III) selon la revendication 2 et 0,0001 à 0,4 % en poids
d'un ou de plusieurs composés différents de la formule (II) selon la revendication 1.

5. Composition selon la revendication 3, dans laquelle la part des composés de la formule (I) est de 0,11 à 10 %, et la part des composés selon la formule (II) est de 0,015 à 0,35 % en poids.

6. Composition selon la revendication 4, dans laquelle la part des composés selon la formule (III) est de 0,11 à 10 %, et la part des composés selon la formule (II) est de 0,015 à 0,35 % en poids.

7. Composition selon l'une des revendications 3 à 6, dans laquelle la somme des matières plastiques, thermoplastiques et des composés selon la formule (I) et des composés selon la formule (II) et des composés selon la formule (III) dans la composition, est de 60 à 100 % en poids.

8. Composition selon l'une des revendications 3 à 7, dans laquelle la matière plastique, thermoplastique est choisie parmi le groupe constitué du bisphénol A homopolycarbonate et des copolycarbonates sur la base des deux monomères bisphénol A et 1,1-bis-(4-hydroxyphényl)-3,3,5-triméthylcyclohexane.

9. Composition selon l'une des revendications 3 à 7, dans laquelle la matière plastique, thermoplastique est du PETG.

10. Composition selon l'une des revendications 3 à 9, dans laquelle la composition contient en plus 0,01 à 0,6 % en poids d'esters ou d'esters partiels d'alcools mono- à hexavalents.

11. Composition selon l'une des revendications 3 à 10, dans laquelle la composition contient en plus 10 à 6000 ppm de thermostabilisateurs.

12. Composition selon la revendication 11, dans laquelle le thermostabilisateur est choisi parmi le groupe consistant en le tris-(2,4-di-tert.butylphényl)phosphite et la triphénylphosphine.

13. Procédé de fabrication de plaques en une ou plusieurs couches, dans lequel au moins une couche contient une composition selon une des revendications 3 à 12, par extrusion ou coextrusion.

14. Produit contenant une composition selon l'une des revendications 3 à 12.

15. Produit selon la revendication 14, choisi parmi le groupe consistant en une plaque en une couche, en une plaque en plusieurs couches, en une plaque massive ondulée, en un profilé nervuré, en un profilé nervuré avec mortaise et tenon, en un système d'assemblage, en un vitrage pour des serres, en un vitrage pour des jardins d'hiver, en un vitrage pour des arrêts d'autobus, en des panneaux publicitaires, en des écriteaux, en des glaces de protection, en des vitrages d'automobile, en des fenêtres et en des toitures.

16. Produit selon la revendication 14, **caractérisé en ce qu'**il s'agit d'une plaque en plusieurs couches, dans laquelle au moins une couche contient une composition selon une des revendications 3 à 12.

17. Produit selon la revendication 16, dans lequel une des couches les plus extérieures de la plaque ou les deux couches les plus extérieures de la plaque contiennent une composition selon une des revendications 3 à 12.

18. Produit selon la revendication 17, dans lequel le plastique thermoplastique est un polycarbonate et dans lequel la plaque a au moins deux couches, et dans lequel au moins une des couches contient une composition selon une des revendications précitées, et en plus un autre polycarbonate.
